# EUROPEAN PATENT APPLICATION

(11) **EP 2 199 843 A1**
(43) Date of publication of application: **23.06.2010**
(21) Application number: 08254086.5
(22) Date of filing: 19.12.2008
(51) Int. Cl.: G02B 27/01, G02B 23/12

(54) **Display system**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A helmet-mounted display system or a head-mounted display system comprises an imaging means for presenting to a user a first image of a real field of view, means for presenting a second image superimposed on the first image, and control means for controlling the contrast between the first and second images so as to maintain the visibility to the user of the second image.

## Description

This invention relates to display systems such as (but not exclusively), helmet-mounted display systems and head-mounted display systems. It is particularly relevant to systems for presenting to pilots and other aircrew of helicopters or fixed wing aircraft, or operators and other crew members of other vehicles (e.g. armoured fighting vehicles), an image of a field of view of the external environment of the vehicle. It also is of use in sighting devices for guns and other ordnance.

Night vision goggles (NVG) are now commonly used by military and emergency service pilots to operate helicopters, and are especially useful when landing under low light conditions. The NVG can be adapted to provide, superimposed on the external field of view, important primary flight data (altitude, attitude, heading and speed) and/or specific landing-related data such as height and position relative the landing ground. These devices are commonly known as Display Night Vision Goggles (DNVG). However, difficulties can arise when the helicopter is to be landed in dusty conditions, or when the landing ground is covered with surface water or loose snow. Then the ground wash from the helicopter may generate a cloud of dust, snow particles or water spray which can confuse the NVG and cause it to present to the pilot a uniformly-bright washed-out image, or one in which the image is reduced to a large number of bright moving spots of light. Then, not only is the pilot deprived of visual references at a critical moment during landing, but the corrupted display merges with the superimposed data display, rendering the superimposed display illegible.

The present invention seeks to provide a solution to, or at least to alleviate, this problem.

The invention provides a display system comprising an imaging means for presenting to a user a first image of a real field of view, means for presenting a second image to the user superimposed on the first image, and control means for controlling the contrast between the first and second images so as to maintain the visibility to the user of the second image.

The system may be a helmet-mounted display or a head-mounted display.

The system may be a sighting device for a gun or other ordnance.

The system may be configured for use in a vehicle by an operator thereof, and comprising means for receiving vehicle-related data for display as second image.

"Vehicle" as used herein means any conveyance, whether for use in the air, on land, or sea, or otherwise.

The imaging means may be an indirect-vision imaging means, nonlimiting examples of which are a low-light imaging means or other image-enhancement means.

By indirect-vision imaging means we mean one in which visible light or other radiation from the field of view is sensed and processed electronically to generate a visible image.

The second image presenting means may be configured to superimpose the second image or the first image after the first image has been processed by the first imaging means.

There may be a first image sensor for sensing the brightness of the first image, the control means being responsive to the sensed brightness.

The control means may be configured to compare the brightness of the first image with a predetermined value.

There may be a second image sensor for sensing the brightness of the second image, the control means being configured to compare the brightness of the first and second images. This can facilitate the use of closed-loop control which is preferred because it relieves the pilot of the task of manually adjusting the contrast during a period of high workload.

The system may comprise a combiner for superimposing the second image on the first image, the second image sensor being configured to sense light from the combiner associated solely with the second image.

The first image sensor may be configured to sense the average brightness of the first image, or of a selected area thereof.

Alternatively the first image sensor may be configured to sense a maximum local brightness occurring in the first image, or the brightness of selected moving features within the first image.

The control means may be configured to control the contrast by adjusting the brightness of the first image.

Thus, the system may comprise a variable transmission filter through which light for forming the first image passes, the control means being configured to control the filter so as to as to adjust the brightness of the first image.

The first image sensor may be positioned to sense said light before it passes through the filter, or it may be positioned to sense said light after it has passed through the filter.

Alternatively or in addition to the foregoing, the control means may be configured to control the contrast by adjusting the brightness of the second image.

Alternatively or in addition it may be configured to control the contrast by adjusting the colour of the second image.

The invention will now be described merely by way of example with reference to the accompanying drawings, wherein:
Figures 1 and 2 show a conventional Display Night Vision Goggle system;
Figures 3, 4 and 5 show alternative embodiments of the invention, and
Figure 6 illustrates the basis of another embodiment of the invention.

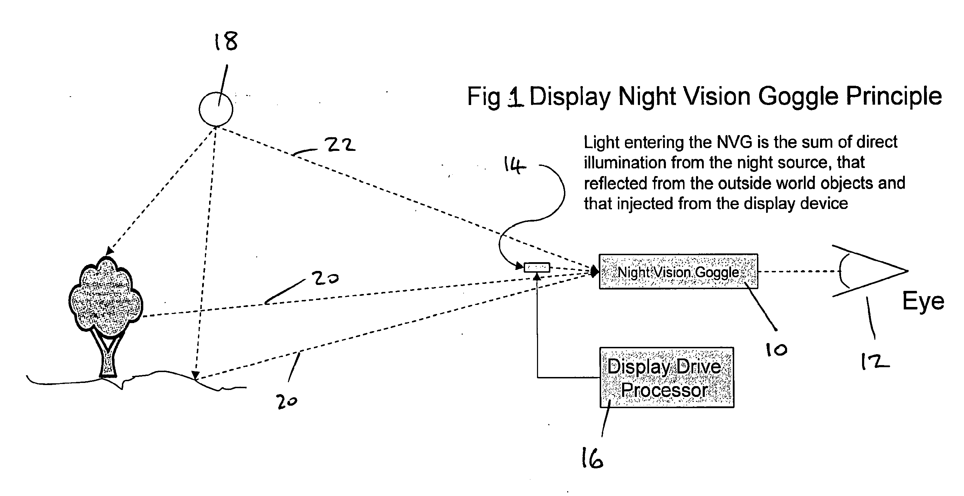

Referring to Figure 1 there is shown a prior art helmet or head-mounted NVG system for a helicopter pilot. A conventional binocular NVG 10 is mounted in front of the pilot's eyes 12. The NVG contains an image intensifier which collects low levels of light or infrared radiation from the field of view and provides an enhanced (brighter) image of the field of view to the pilot. A display device 14 is supplied with flight information data and/or landing data from a display driver 16 and presents a second image to the pilot's eyes via the NVG 10. The second image is superimposed on the first (field-of-view) image and normally can easily be distinguished from it because the data image is much brighter than the field-of-view image, and is thus contrasted with it.

Figure 1 illustrates a favourable landing situation; low levels of light reflected from the moon 18 or clouds or present in the evening sky (so called after glow) illuminate the scene. Light entering the NVG consists of both the indirect rays 20 reflected from the scene and the direct rays 22 from the illumination source. Under normal operating conditions the pilot reduces as far as possible the direct rays, i.e. by not looking directly at the moon, to avoid the NVG saturating at maximum output brightness and becoming unusable.

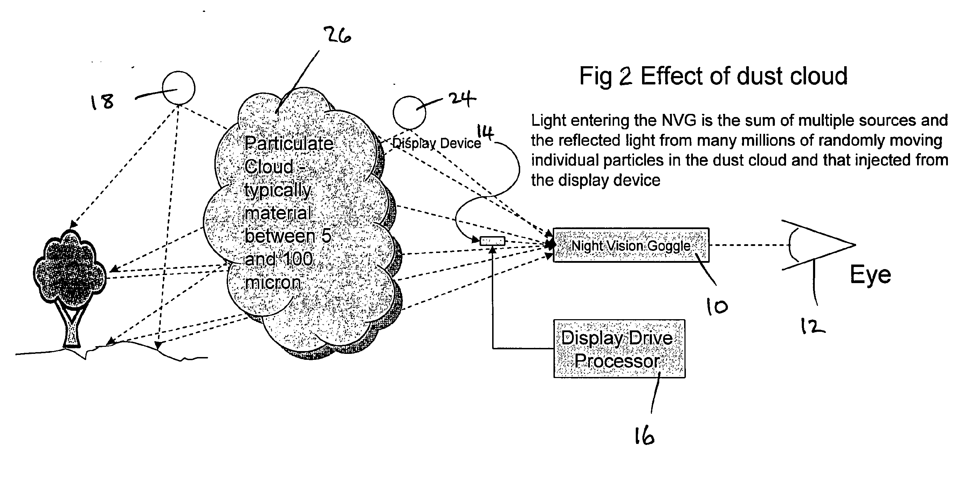

Under some conditions additional illuminators or reflectors are present during the landing. These may be man-made (e.g. 24, Figure 2) or they may be due to a cloud of solid or liquid particulate matter (dust, snow, water spray etc) 26 thrown-up by the helicopter's ground wash. The dust particles are typically between 5 and100 µm in size.

The overall effect is to increase the difficulties faced by the pilot when landing the helicopter in such "brown-out" or "white-out" conditions. As well as the inherently-limited field of view of the goggle system and loss of direct visibility due to the cloud, additional difficulty is caused by stray light being reflected from the many particles in the cloud into the NVG 10. This scattered light results in excessive scintillation and saturation of the NVG, presenting to the pilot a display of numerous bright sports of light apparently moving in sympathy with the dust cloud. In addition the scintillations may appear to be modulated by the aircraft rotor frequency. Such NVG output can prevent the pilot from obtaining any usable view of the outside world and the immediate landing area. Additionally the movement of the light spots visible in the NVG tends to cause disorientation and further to interfere with the pilot's ability to read the data image even if the outside-world image is not fully obscured.

When the NVG saturates, the second (data) image from the display device 14 as well as the outside-world image is lost to the pilot. This occurs because the light particles representing both the data image and the outside world pass through the NVG 10 and are processed in exactly the same way. Both are lost in the excessively-brightened randomised background, increasing the difficulty and hazard associated with the landing manoeuvre.

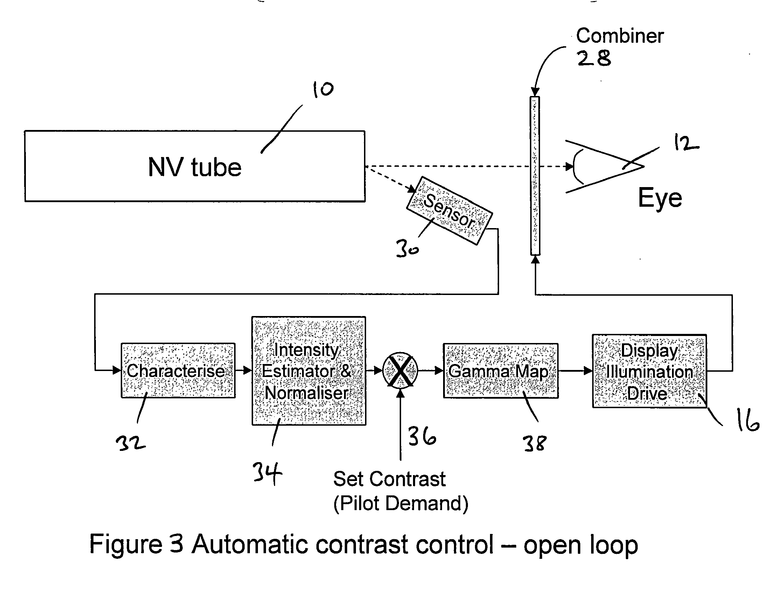

Figure 3 shows an embodiment of a display system according to the invention. Here, the second (data) image is overlaid onto the field-of-view image after rather than before it has passed through the NVG 10. This is achieved by means of a holographic or other image combiner 28 (such as described in our earlier applications W02007/029032 or W02007/029034) which is disposed between the NVG 10 and the pilot's eye 12. The data image is provided to the combiner 28 by a display driver 16 as already described.

The present invention takes advantage of the fact that the data image does not pass through the NVG 10, and seeks to ensure that a minimum contrast either in relative brightness (intensity) or colour or both is maintained between the field-of-view image and the data image so that the data image is always available to the pilot even in conditions of brown-out or white-out.

The light output of the NVG 10 is sampled by a suitable sensor or camera 30, the output of which, once characterised in a signal conditioner 32 to take account the sensor calibration parameters, is used in an estimator and normaliser 34 to determine the intensity (relative brightness) of the NVG image. Depending upon the sophistication of the sensor employed this brightness may for example be calculated as an average of the whole display, or a particular area, or may be factored to account for particle movement or individual bright spots. The required contrast between the display and the NVG device output is set manually at 36 by the pilot and is compared with the measured and normalised NVG image brightness to create a brightness demand for the data image. This demand is factored in a gamma decoder 38 to account for the gamma of the image combiner 28 and used to set the display illumination level. The time response of the control loop may be adjusted to prevent the pilot from being distracted by a too rapid or slow contrast adjustment.

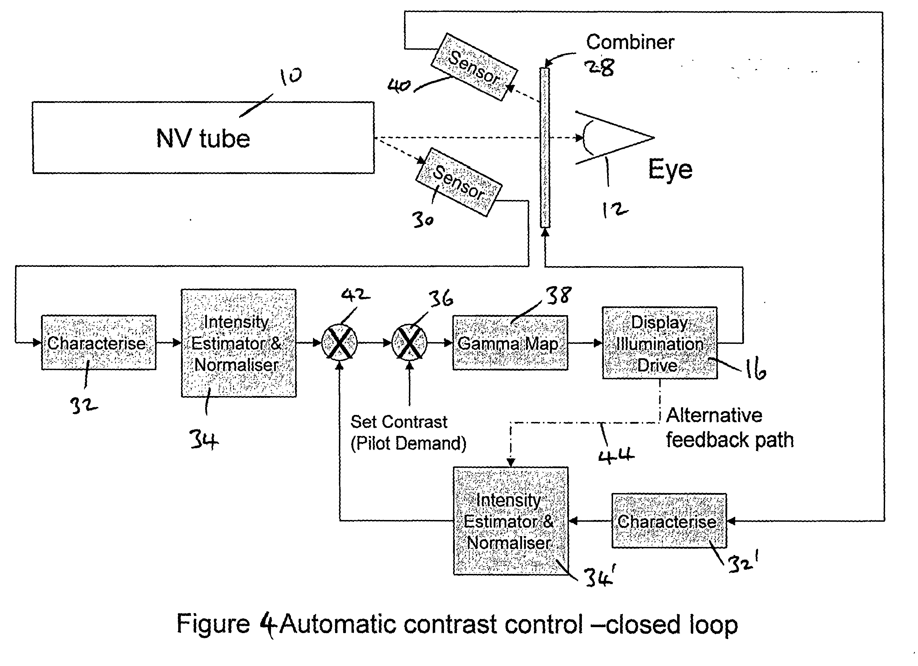

Figure 4 shows another embodiment, corresponding features having the same reference numerals as in Figure 3. This embodiment develops the concept by using closed loop control, where both the NVG output and the data display device outputs are measured. A second sensor 40 is used to detect the brightness of the data display illumination from the combiner 28 which is fed back, conditioned and normalised at 32', 34' and then compared in comparator 42 with the brightness of the NVG output before contrast demand is applied by comparator 36. It is important that the light sampled from the display device does not contain any NVG device output; this may be accomplished by sampling light escaping from the front or sides of the holographic combiner as shown in Figure 4. At the expense of additional complexity, the closed loop control obviates the need for a closely controlled relationship between actual light output from the combiner 28 and the output of the electro-optical display driver 16, reducing the number of corrective contrast control inputs required from the pilot.

If the relationship between the output of the driver 16 and the brightness of the data display is known and stable, then a simpler alternative is to take feedback from the display illumination drive electronics and apply this to the intensity estimator 34' as shown by dotted line 44 in Figure 4.

Additionally the display feedback loop described here may be utilised as part of a monitoring system for high integrity applications, where for example the data display carries safety critical primary flight information.

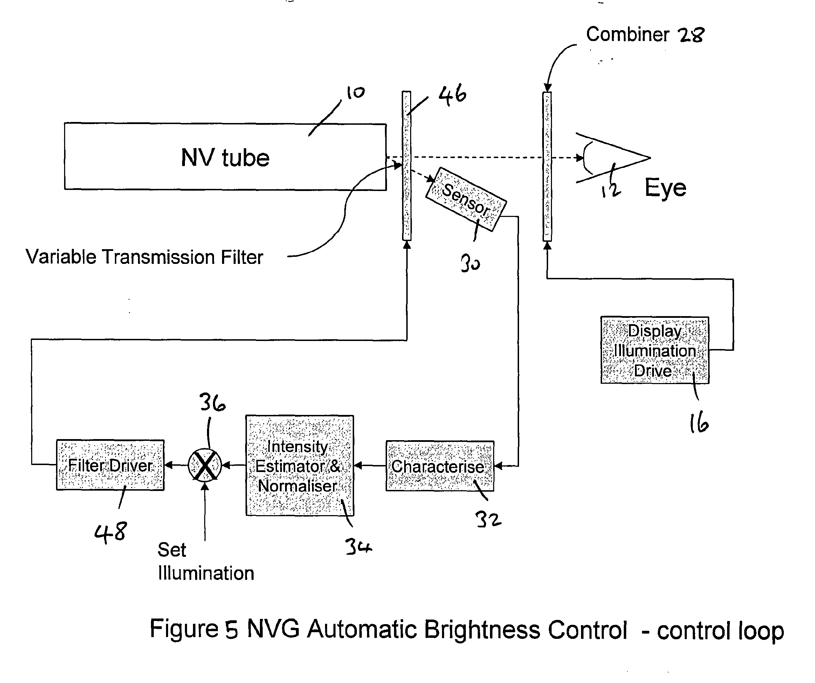

The embodiments described so far do not directly affect the output from the NVG 10 and therefore cannot turn off or degrade the pilot's primary night vision display through a fault or other reason. They will not therefore place the pilot or aircraft at hazard by inadvertently blanking the pilots outside world view. However there is an advantage in controlling the amount of light emitted from the NVG 10 in order to limit or reduce it under the conditions considered for this invention. Figure 5 shows a scheme where the NVG 10 output is taken via a variable transmission filter 46, the transmissibility of the filter being adjusted by a driver 48 to limit the amount of light output from the NVG 10 which passes to the combiner 28. In the example, the sensor 30 is located after the transmission filter so that the system acts to maintain a constant output level. Alternately the sensor 30 may be located between the filter 46 and the NVG 10, allowing the filter to remain at maximum transmission during normal operation but to be switched to attenuate the NVG when it enters saturation.

A further alternative is to embody a brightness or gain control mechanism into the NVG 10, replacing the transmission filter 46 of Figure 5. The control mechanism then can be used to attenuate or shut down the NVG device when saturation or excessive scintillation is detected.

A further refinement is to combine the NVG output control described with reference to Figure 5 with the display control of Figures 3 or 4 where, under conditions of NVG saturation or excessive scintillation, the NVG output is attenuated and the display image brightness adjusted for an optimum presentation. In this configuration it is important that the control loops have proper time response characteristics, such that interaction between them is minimised and the overall system remains stable.

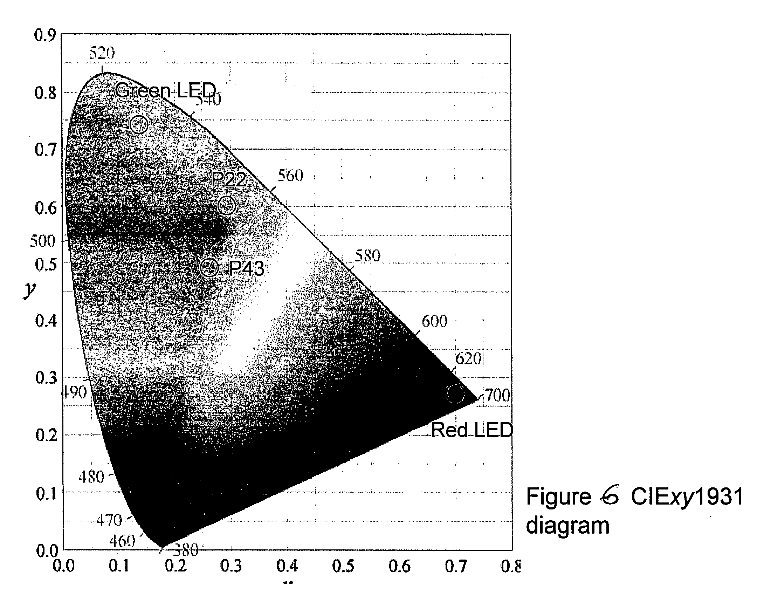

Perceived colour may be used to increase the differentiation between the NVG and data displays. Figure 6 illustrates the standard CIE 1931 diagram overlaid with typical colours associated with the system. Typical NVG display devices use P22 or P43 phosphors on their output screens to produce a night scene that comprises varies shades of green centred on the nominal phosphor spectrum. Data display systems intended for night operation also tend to be green in order to operate in the most sensitive part of the human eye response, for example a green LED illuminator as shown in the Figure. The difference between this point and either the P22 or P43 phosphors determines the spectral separation between the data display and the night scene, although as brightness is increased towards saturation the human eye perceives all of these colours as tending towards white. Differentiation between the data image and the NVG image is improved in this embodiment of the invention by the introduction of red, or another colour discriminated from the NVG device phosphor, into the data image display. This additional colour component may be used instead of the standard green illuminator or alongside it, the quantity of discriminated colour being increased as a function of contrast demand, increasing both spectral and brightness discrimination between the NVG image and the data image display.

The architecture of such a system can be similar to that of Figures 3, 4 or 5, except that it will be configured to control the colour of the data image rather than, or as well as, its brightness.

Although described in the context of a display system for a helicopter pilot, the invention may also be useful for pilots of other aircraft, including for example vertical or short take-off or landing (V/STOL) aircraft. It may also be of use for other aircrew or for military personnel for example for drivers or other crew of military vehicles or in helmet-mounted or head-mounted systems for infantrymen. It further may be of use in indirect-vision gun sights or other sighting devices for ordnance such as missiles, anti-tank weapons and rocket-propelled grenades, for example (but not exclusively) for infantry use. In such an embodiment, the first imaging means 10 is aligned with the boresight of the gun or weapon launcher.

## Claims

1. A display system comprising an imaging means for presenting to a user a first image of a real field of view, means for presenting a second image to the view superimposed on the first image, and control means for controlling the contrast between the first and second images so as to maintain the visibility to the user of the second image.

2. A system as in claim 1, being a helmet-mounted display or a head-mounted display, or a sighting device for a gun or other ordnance.

3. A display system as in claim 1 or 2 being configured for use in a vehicle by an operator thereof, and comprising means for receiving vehicle-related data for display as said second image.

4. A system as in any preceding claim, wherein the first imaging means is an indirect vision imaging means, preferably a low-light imaging means or other image-enhancement means.

5. A system as in any preceding claim wherein the second image presenting means is configured to superimpose the second image on the first image after the first image has been processed by the first imaging means.

6. A system as in any preceding claim comprising a first image sensor for sensing the brightness of the first image, the control means being responsive to the sensed brightness.

7. A system as in claim 6 comprising a second image sensor for sensing the brightness of the second image, the control means being configured to compare the brightness of the first and second images.

8. A system as in claim 7 comprising a combiner for superimposing the second image on the first image, the second image intensity sensor being configured to sense light from the combiner associated solely with the second image.

9. A system as in claim 7 wherein the second image sensor is configured to sense an electrical signal which is indicative of the brightness of the second image.

10. A system as in any of the claims 5 to 9 wherein the first image sensor is configured to sense the average brightness of the first image, or of a selected area thereof.

11. A system as in any of claims 5 to 9 wherein the first image sensor is configured to sense a maximum local brightness occurring in the first image, or the brightness of selected moving features within the first image.

12. A system as in any preceding claim wherein the control means is configured to control the contrast by adjusting the brightness of the first image.

13. A system as in claim 12 comprising a variable transmission filter through which light for forming the first image passes, the control means being configured to control the filter so as to as to adjust the brightness of the first image.

14. A system as in any preceding claim wherein the control means is configured to control the contrast by adjusting the brightness of the second image.

15. A system as in any preceding claim wherein the control means is configured to control the contrast by adjusting the colour of the second image.
